# EUROPÄISCHE PATENTSCHRIFT

(11) **EP 2 545 295 B1**
(45) Veröffentlichungstag und Bekanntmachung des Hinweises auf die Patenterteilung: **21.08.2019**
(21) Anmeldenummer: 11703605.3
(22) Anmeldetag: 08.02.2011
(51) Int. Cl.: F16F 15/26, F02B 75/06

(54) **VORRICHTUNG ZUM MASSENAUSGLEICH FÜR EINE HUBKOLBEN-BRENNKRAFTMASCHINE**
DEVICE FOR MASS BALANCING OF A RECIPROCATING-PISTON INTERNAL COMBUSTION ENGINE
DISPOSITIF D'ÉQUILIBRAGE DES MASSES POUR UN MOTEUR À COMBUSTION INTERNE À MOUVEMENT ALTERNATIF

(30) Priorität: 09.03.2010 DE 102010010641
(43) Veröffentlichungstag der Anmeldung: 16.01.2013
(73) Patentinhaber: Bayerische Motoren Werke Aktiengesellschaft, 80809 München (DE)
(72) Erfinder: MIRLACH, Robert, 82131 Gauting (DE); KRAUS, Norbert, 81829 München (DE)
(74) Vertreter: Bücken, Helmut
(86) Internationale Anmeldenummer: PCT/EP2011/000587
(87) Internationale Veröffentlichungsnummer: WO 2011/110266

(56) Entgegenhaltungen:
- EP-A2- 1 788 279
- GB-A- 2 117 837
- JP-A- 3 037 453

## Beschreibung

Die Erfindung betrifft eine Vorrichtung zum Massenausgleich für eine Hubkolben-Brennkraftmaschine mit den Merkmalen aus dem Oberbegriff des Patentanspruchs 1.

Zur Verbesserung von Innengeräuschen und des Komforts in modernen Personenkraftwagen sind Ausgleichswellensysteme (AGW-Systeme) insbesondere bei Vierzylinder-Brennkraftmaschinen ab einem Hubraum von ca. 1,8 I gängige Praxis.

Hierbei gleicht der größte Teil dieser AGW-Systeme, die nach dem sog. Lancaster-Ausgleich benannt sind, die durch die Vierzylinder-Hubkolben-Brennkraftmaschine entstehenden freien Massenkräfte der zweiten Motorordnung aus. Dazu werden zwei nebeneinanderliegende, sich gegenläufig drehende Ausgleichswellen in einem Ausgleichswellengehäuse gelagert und mit doppelter Kurbelwellendrehzahl angetrieben. Die dabei verwendeten Unwuchtmassen werden so dimensioniert, dass sich ihre, in Brennkraftmaschinenhochrichtung wirkenden Kräfte so addieren, dass sie die freien Massenkräfte zweiter Motorordnung der Brennkraftmaschine kompensieren. Die in Brennkraftmaschinen-Querrichtung wirkenden Kräfte der Unwuchten addieren sich zu Null. Solch ein Ausgleichswellensystem ist üblicherweise als kompaktes Modul geodätisch unterhalb der Kurbelwelle angeordnet.

Ein weitaus geringerer Teil von AGW-Systemen kompensiert nicht nur die freien Massenkräfte zweiter Motorordnung, sondern zur weiteren Verbesserung von Innengeräuschen und Komfort auch einen Teil der um die Kurbelwellenachse wirkenden Massenmomente zweiter Motorordnung. Erreicht wird dies durch einen Höhenversatz der Ausgleichswellen. Dabei macht man sich zunutze, dass sich die Querkräfte der Unwuchten zwar zu Null addieren, durch den Höhenversatz aber ein Moment erzeugen, welches ebenfalls um die Kurbelwellenachse wirkt. Üblicherweise befindet sich solch ein AGW-System im Bereich des Kurbelgehäuses als seitlich angegossene bzw. angeflanschte Kanäle, in denen dann jeweils eine Ausgleichswelle gelagert ist.

Weiter ist aus der Europäischen Patentanmeldung EP 1 788 279 A2 ein multifunktionelles Ausgleichssystem für Hubkolben-Brennkraftmaschinen bekannt mit drei Ausgleichswellen. Diese Anordnung führt dazu, dass die oszillierenden Massenkräfte und das Massenmoment um die Kurbelwellenachse total ausgeglichen werden. Eine weitere Vorrichtung zum Massenausgleich für Hubkolben-Brennkraftmaschinen mit zwei Ausgleichswellen ist aus der GB2117837 A bekannt.

Weiter wird zum Stand der Technik auf die deutsche Offenlegungsschrift DT 25 08 325 A1 hingewiesen, von der diese Erfindung ausgeht. Aus der DT 25 08 325 A1 ist eine Vorrichtung zum Massenausgleich für eine Hubkolben-Brennkraftmaschine mit vier Kolben bekannt, wobei die Kolben von einer Kurbelwelle über Pleuel antreibbar sind. Zum Massenausgleich sind eine erste Ausgleichswelle mit einem ersten Ausgleichsgewicht und eine zweite Ausgleichswelle mit einem zweiten Ausgleichsgewicht vorgesehen. Die erste Ausgleichswelle dreht zur Kurbelwelle gegensinnig und die zweite Ausgleichswelle zur Kurbelwelle gleichsinnig, jeweils mit der doppelten Kurbelwellendrehzahl.

Sowohl die AGW-Systeme, welche als kompaktes Modul innerhalb der Schmiermittelwanne angeordnet, als auch die AGW-Systeme, die im Bereich des Kurbelgehäuses angeordnet sind, sind durch das äußere Package in ihrer Platzierung stark eingeschränkt und müssen Kompromisse bezüglich weiterer Randbedingungen eingehen. Ein Modul im Bereich der Schmiermittelwanne muss z. B. ein ausreichendes Schmiermittelvolumen zulassen und darf nicht zu einer Schmiermittelverschäumung beitragen. Ausgleichswellensysteme am Kurbelgehäuse dagegen können u. a., je nach Konzept, zu hohen Kosten führen, insbesondere wenn das Kurbelgehäuse nicht mehr als Druckgussteil ausgeführt werden kann.

Neben den o. g. Randbedingungen haben alle AGW-Systeme eine weitere wichtige Forderung zu erfüllen: Die durch die Ausgleichswellen erzeugte Gesamtkraft muss in Zylinderhochrichtung (Z) gerichtet sein und muss sich in Längsrichtung in der Mitte des Kurbeltriebs (für Vierzylinder-Brennkraftmaschinen in der Mitte des dritten Kurbelwellenhauptlagers) und in Querrichtung in der Verlängerung der Zylinderachse befinden. Eine Abweichung von dieser Idealposition führt unweigerlich zu negativen Effekten in Form von zusätzlichen, ungewünschten Massenmomenten um die Brennkraftmaschinenquer-, Brennkraftmaschinenhoch- und Brennkraftmaschinenlängsachse.

Abweichungen von den geometrischen Idealbedingungen führen somit dazu, dass bei real ausgeführten Ausgleichswellen der Ausgleich der Massenkräfte und Massenmomente häufig ein Kompromiss zu Lasten der akustischen Wirksamkeit ist.

Aufgabe der vorliegenden Erfindung ist es, eine Maßnahme aufzuzeigen, um die akustische Wirksamkeit einer Vorrichtung zum Massenausgleich für eine Hubkolben-Brennkraftmaschine zu verbessern.

Diese Aufgabe wird durch das Merkmal im kennzeichnenden Teil des Patentanspruchs 1 gelöst. Durch die erfindungsgemäße Ausgestaltung ergeben sich Vorteile in mehrerer Hinsicht:
- An vorderster Stelle steht hier eine gegenüber dem herkömmlichen Stand der Technik optimierte Funktion in Form einer Körperschallreduktion.
- Da diese Körperschallreduktion auf herkömmliche Art und Weise nur mit größerer Konstruktionsänderung umzusetzen wäre, bietet die Erfindung auch Vorteile bezüglich der Kosten.
- Ein weiterer Vorteil der Erfindung ist die Einfachheit, die Idee umzusetzen. Eine um ca. 20 % leichteres zweites Ausgleichsgewicht 4' führt beispielsweise zu einer Körperschallreduktion um ca. 60 %.

Die Unteransprüche 2 bis 4 beschreiben vorteilhafte Weiterbildungen der Erfindung.

Im Folgenden ist die Erfindung anhand des Standes der Technik und einem erfindungsgemäßen Ausführungsbeispiel in vier schematischen Figuren näher erläutert.
- Fig. 1: zeigt die Massenkräfte für eine gattungsgemäße Brennkraftmaschine zu einem Zeitpunkt bei 0° Kurbelwinkel.
- Fig. 2: zeigt die Massenkräfte und Massenmomente für eine gattungsgemäße Brennkraftmaschine zu einem Zeitpunkt bei 45° Kurbelwinkel.
- Fig. 3: zeigt die Massenkräfte für eine erfindungsgemäß ausgestaltete Brennkraftmaschine zu einem Zeitpunkt bei 0° Kurbelwinkel.
- Fig. 4: zeigt die Massenkräfte, Massenmomente und Restkräfte für eine erfindungsgemäße Brennkraftmaschine zu einem Zeitpunkt bei 45° Kurbelwinkel.

Im Folgenden gelten in allen vier Figuren für gleiche Bauelemente die gleichen Bezugsziffern.

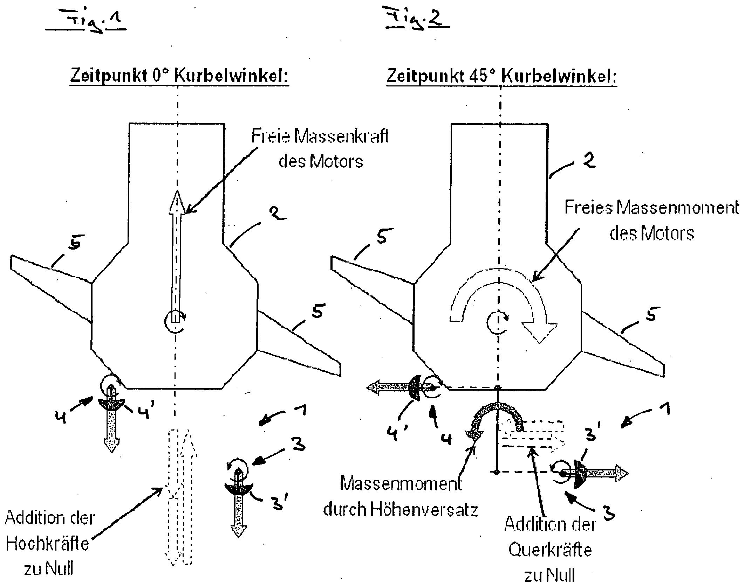

Wie oben schon erläutert, setzen gängige Ausgleichswellensysteme eine vollständige Kompensation ihrer Querkräfte um, indem sie die Unwuchten der Ausgleichsgewichte beider Ausgleichswellen gleich groß dimensionieren. Die Wirkung eines solchen herkömmlichen Ausgleichswellensystems ist in den Figuren 1 und 2 zu sehen und näher erläutert:
Fig. 1 zeigt wie alle folgenden Figuren schematisch eine Stirnseite eine Hubkolben-Brennkraftmaschine 2 mit einer Vorrichtung 1 (AGW-System) zum Massenausgleich für die Hubkolben-Brennkraftmaschine 2. Eine vertikale Zylinderhochachse (Z) ist strichpunktiert dargestellt. Die Vorrichtung 1 besteht aus einer ersten Ausgleichswelle 3 mit einem ersten Ausgleichsgewicht 3' und einer zweiten Ausgleichswelle 4 mit einem zweiten Ausgleichsgewicht 4'. Die Drehrichtungen der Ausgleichswellen 3, 4, sowie einer nicht näher dargestellten Kurbelwelle sind durch Dreiviertelkreise schematisch dargestellt. Seitlich ist an die Hubkolben-Brennkraftmaschine 2 jeweils ein Träger 5 angeordnet, zur Lagerung der Hubkolben-Brennkraftmaschine 2 in einem Kraftfahrzeug.

Die Hubkolben-Brennkraftmaschine 2 weist zumindest einen nicht dargestellten Kolben auf, im vorliegenden Ausführungsbeispiel vier Kolben, die von der nicht dargestellten Kurbelwelle über ebenfalls nicht dargestelltes Pleuel antreibbar sind. Die erste und die zweite Ausgleichswelle 3, 4 werden von der Kurbelwelle in doppelter Kurbelwellendrehzahl angetrieben, wobei die erste Ausgleichswelle 3 gegensinnig und die zweite Ausgleichswelle gleichsinnig mit der Kurbelwelle dreht. In Fig. 1 ist ein Zeitpunkt dargestellt, in dem die Kurbelwelle 0° Kurbelwinkel aufweist. Dies bedeutet, dass die freie Massenkraft der Hubkolben-Brennkraftmaschine 2 in Richtung der Zylinderachse nach oben gerichtet ist. Die Ausgleichsgewichte 3', 4' sind nach unten gerichtet, wodurch sich deren Kräfte addieren. Hierdurch werden durch die zwei Ausgleichswellen 3, 4, bzw. deren Unwuchtmassen 3', 4' der freien Massenkraft der Hubkolben-Brennkraftmaschine 2 entgegen gerichtete Kräfte aufgebaut, welche die freie Massenkraft der Hubkolben-Brennkraftmaschine 2 eliminieren. Die freien Massenkräfte sind durch Pfeile an den Ausgleichswellen 3, 4 und der Kurbelwelle, sowie als Kräfteaddition unter der Hubkolben-Brennkraftmaschine 2 dargestellt. Wie erkennbar, führt die Addition der Hochkräfte in dieser Kurbelwellenstellung zu Null.

Fig. 2 zeigt schematisch das gleiche Ausführungsbeispiel aus dem Stand der Technik wie Fig. 1, jedoch zu einem Zeitpunkt, an dem die Kurbelwelle 45° Kurbelwinkel aufweist, d. h. 45° Kurbelwinkel weiter gedreht ist. Die Ausgleichsgewichte 3', 4' sind nun nach außen gerichtet, wodurch sich deren Massenkräfte gegenseitig eliminieren. Ein freies Massenmoment der Hubkolben-Brennkraftmaschine 2 ist schematisch durch einen halbrunden Pfeil um die Kurbelwelle dargestellt. Dieses freie Massenmoment der Hubkolben-Brennkraftmaschine 2 wird verringert durch ein gegengerichtetes Massenmoment, welches dadurch erzeugt wird, dass die erste und die zweite Ausgleichswelle 3, 4, bzw. deren Ausgleichsgewichte 3', 4' einen Höhenversatz zueinander aufweisen. Die Massenmomente sind durch halbrunde Pfeile schematisch dargestellt.

Zusammenfassung zu den Fig. 1 und 2 (Stand der Technik):
Die beiden gegenläufig rotierenden Ausgleichswellen 3, 4 erzeugen Hoch- und Querkräfte. Zum Zeitpunkt 0° Kurbelwinkel (0° KW) erzeugen die gleich groß dimensionierten Ausgleichsgewichte 3', 4' eine reine Hochkraft, welche sich mit der freien Massenkraft der Hubkolben-Brennkraftmaschine 2 zu Null addieren (volle Kompensation der Massenkraft zweiter Motorordnung). Zum Zeitpunkt 45° Kurbelwinkel (45° KW) ist die freie Massenkraft zweiter Motorordnung - welche einem Kosinusverlauf folgt - auf Null gesunken. Die mit der doppelten Kurbelwellendrehzahl rotierenden Unwuchten der Ausgleichsgewichte 3', 4' erzeugen nun reine Querkräfte. Da die Unwuchten gleich groß sind, addieren sich diese zu Null. Durch den Höhenversatz aber erzeugen sie ein sinusförmiges Massenmoment, welches dem sinusförmigen, freien Massenmoment der Hubkolben-Brennkraftmaschine 2 entgegenwirkt.

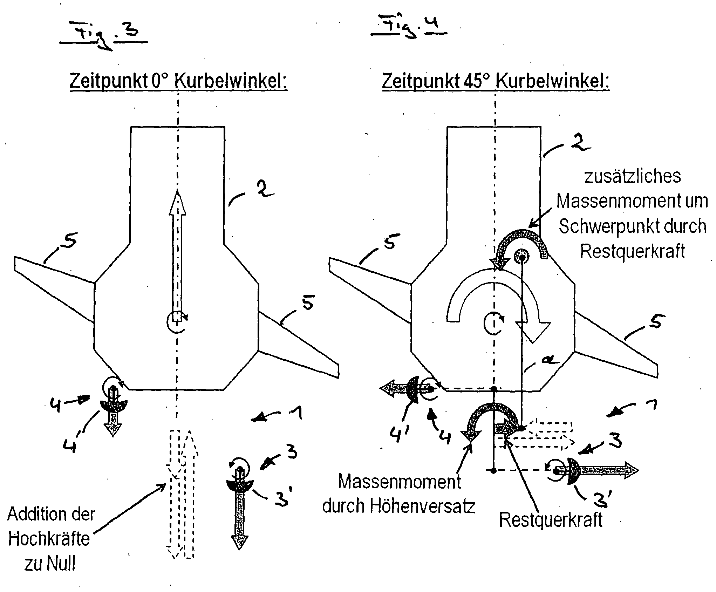

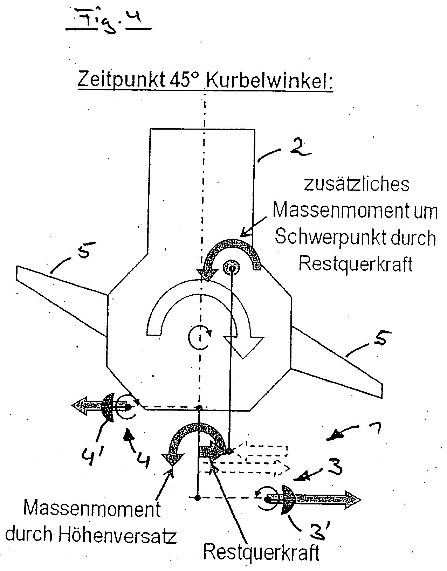

Wie die Fig. 3 und 4 nun zeigen, geht die Erfindung einen anderen Weg. Im Gegensatz zu dem vorhergehenden, bekannten System lässt die Erfindung definierte Querkräfte zu.

Die Figuren 3 und 4 zeigen die Hubkolben-Brennkraftmaschine 2 aus den Fig. 1 und 2, jedoch dieses Mal mit einer erfindungsgemäßen Vorrichtung 1 zum Massenausgleich für die Hubkolben-Brennkraftmaschine 2. Kräfte sind wiederum durch gerade Pfeile dargestellt, während Massenmomente durch halbrunde dicke Pfeile dargestellt sind. Die Drehrichtungen sind wieder durch dünne Dreiviertelkreise dargestellt.

Während Fig. 3 die Hubkolben-Brennkraftmaschine 2 wieder zum Zeitpunkt 0° Kurbelwinkel darstellt, stellt Fig. 4 die Hubkolben-Brennkraftmaschine 2 wieder zum Zeitpunkt 45° Kurbelwinkel dar. Erfindungsgemäß weist das erste Ausgleichsgewicht 3' eine größere Masse auf als das zweite Ausgleichsgewicht 4'. Darüber hinaus ist die erste Ausgleichswelle 3 bezüglich der Zylinderhochachse (Z) in einer anderen geodätischen Höhe angeordnet als die zweite Ausgleichswelle 4. In diesem Ausführungsbeispiel ist die erste Ausgleichswelle 3 geodätisch tiefer angeordnet. Abhängig von der Ausgestaltung der Hubkolben-Brennkraftmaschine 2 ist eine gegenüber der Masse des zweiten Ausgleichsgewichts 4' um bis zu 30 % größere Masse des ersten Ausgleichsgewichts 3' sinnvoll.

Analog zu den Fig. 1 und 2, die den Stand der Technik beschreiben, wird die erfindungsgemäße Auswirkung der Erfindung für die Fig. 3 und 4 erläutert. Die Unwuchten des ersten und des zweiten Ausgleichsgewichtes 3', 4' werden nun unterschiedlich groß dimensioniert. Die Unwucht der Ausgleichswelle 3, welche sich entgegen dem Drehsinn der Kurbelwelle dreht, ist größer als die der anderen Ausgleichswelle 4. In Summe ergibt sich nach wie vor eine Hochkraft, welche die freie Massenkraft der Hubkolben-Brennkraftmaschine 2 kompensiert. Siehe Kräfteaddition in Fig. 3 unter der Hubkolben-Brennkraftmaschine 2.

Die Querkräfte hingegen (Fig. 4) addieren sich nun nicht mehr zu Null. Es bleibt eine Restquerkraft übrig, welche einem Sinusverlauf folgt. Siehe Kräfteaddition in Fig. 4 unter der Hubkolben-Brennkraftmaschine 2. Diese Restquerkraft erzeugt mit einem Abstand a zum Schwerpunkt des Brennkraftmaschinen-Getriebe-Verbands als Hebelarm ein zusätzliches Moment, welches ebenso wie das aus dem Höhenversatz der Ausgleichswellen 3, 4 resultierende Moment dem freien Massenmoment der Hubkolben-Brennkraft-maschine 2 entgegenwirkt.

Diese Erfindung kann nicht nur auf Ausgleichswellensysteme mit Höhenversatz, sondern auch auf herkömmliche Systeme ohne Höhenversatz angewandt werden. Dies bedeutet, dass selbst Ausgleichswellensysteme ohne Höhenversatz einen Teil der Massenmomente der Hubkolben-Brennkraftmaschine 2 kompensieren können.

Die Restquerkraft (Fig. 4) erzeugt neben der erwünschten Reduktion des Massenmoments um die Kurbelwellenachse auch ein Moment um die Zylinderhochachse (Z), das sich allerdings aufgrund niedriger Lagersteifigkeiten in Quer- und Längsrichtung sowie einer hohen Massenträgheit um die Zylinderhochachse (Z) kaum auswirkt und durch eine konstruktive Ausgestaltung derart, dass der Schwerpunkt des Gesamtaggregats in Kurbelwellenrichtung nahe am dritten Hauptlager liegt, weiter reduziert oder gar eliminiert werden kann.

In einem untersuchten Fall, mit einer aufgeladenen 2-Liter-4-Zylinder-Hubkolben-Brennkraftmaschine 2 brachte ein Unterschied von 20 % der Unwuchten zueinander eine Reduktion des Körperschalls um ca. 60 %.

Zusammengefasst ergeben sich nochmals folgende Vorteile aufgrund der Erfindung:
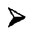 an vorderster Stelle steht hier eine gegenüber dem herkömmlichen Stand der Technik optimierte Funktion in Form einer Körperschallreduktion.
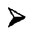 Da diese Körperschallreduktion auf herkömmliche Art und Weise nur mit größeren Konstruktionsänderungen umzusetzen wäre (z. B. Verlagerung des AGW-Systems in den Bereich des Kurbelgehäuses), bietet die Erfindung auch Vorteile bezüglich der Kosten
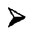 ein weiterer Vorteil ist die Einfachheit, die Idee umzusetzen. Ein Unterschied der Unwuchtmassen von 20 % relativ zueinander führte im untersuchten Fall zu einer Körperschallreduktion von 60 %.

### Bezugszeichenliste:

- 1.: Vorrichtung
- 2.: Hubkolben-Brennkraftmaschine
- 3.: erste Ausgleichswelle
- 3': erstes Ausgleichsgewicht
- 4.: zweite Ausgleichwelle
- 4': zweites Ausgleichsgewicht
- 5.: Träger

## Patentansprüche

1. Vorrichtung (1) zum Massenausgleich für eine Hubkolben-Brennkraftmaschine (2) mit zumindest einem Kolben, der von einer Kurbelwelle über ein Pleuel antreibbar ist, wobei für die Vorrichtung (1) genau zwei Ausgleichswellen (3, 4) vorgesehen sind, wobei eine erste Ausgleichswelle (3) mit einem ersten Ausgleichsgewicht (3') und eine zweite Ausgleichwelle (4) mit einem zweiten Ausgleichsgewicht (4') ausgestattet ist, wobei die erste Ausgleichswelle (3) von der Kurbelwelle gegensinnig und die zweite Ausgleichwelle (4) gleichsinnig, jeweils mit einer doppelten Kurbelwellendrehzahl rotatorisch antreibbar sind,
**dadurch gekennzeichnet, dass** das erste Ausgleichsgewicht (3') eine größere Masse aufweist als das zweite Ausgleichsgewicht (4').

2. Vorrichtung nach Patentanspruch 1,
**dadurch gekennzeichnet, dass** die erste Ausgleichswelle (3) bezüglich einer Zylinderhochachse (Z) eine unterschiedliche geodätische Höhe aufweist bezüglich der zweiten Ausgleichswelle (4).

3. Vorrichtung nach Patentanspruch 2,
**dadurch gekennzeichnet, dass** die erste Ausgleichswelle (3) geodätisch tiefer angeordnet ist.

4. Vorrichtung nach einem der Patentansprüche 1 bis 3,
**dadurch gekennzeichnet, dass** die Masse des ersten Ausgleichsgewichtes (3') bis zu 30% größer ist als die Masse des zweiten Ausgleichsgewichtes (4').

## Claims

1. A device (1) for mass balancing for a reciprocating internal combustion engine (2) with at least one piston which can be driven by a crankshaft by way of a connecting rod, wherein precisely two balance shafts (3, 4) are provided for the device (1), wherein a first balance shaft (3) is equipped with a first balance weight (3') and a second balance shaft (4) is equipped with a second balance weight (4'), wherein the first balance shaft (3) can be driven in rotation in the opposite direction from the crankshaft and the second balance shaft (4) in the same direction, in each case at twice the crankshaft speed,
**characterised in that** the first balance weight (3') has a greater mass than the second balance weight (4').

2. A device according to Claim 1,
**characterised in that** the first balance shaft (3) with respect to a vertical cylinder axis (Z) has a different geodetic height with respect to the second balance shaft (4).

3. A device according to Claim 2,
**characterised in that** the first balance shaft (3) is arranged geodetically deeper.

4. A device according to one of Claims 1 to 3,
**characterised in that** the mass of the first balance weight (3') is up to 30% greater than the mass of the second balance weight (4').

## Revendications

1. Dispositif (1) d'équilibrage de masse pour un moteur à combustion interne (2) à piston alternatif comprenant au moins un piston qui peut être entrainé par un vilebrequin par l'intermédiaire d'une bielle, précisément deux arbres d'équilibrage (3, 4) étant prévus pour le dispositif (1), un premier arbre d'équilibrage (3) étant équipé d'un premier poids d'équilibrage (3') et le second arbre d'équilibrage (4) étant équipé d'un second poids d'équilibrage (4'), le premier arbre d'équilibrage (3) pouvant être entrainé en rotation en sens inverse du vilebrequin et le second arbre d'équilibrage (4) pouvant être entrainé en rotation dans le même sens que celui-ci, respectivement avec une vitesse de rotation double de celle du vilebrequin,
**caractérisé en ce que**
le premier poids d'équilibrage (3') a une masse supérieure à celle du second poids d'équilibrage (4').

2. Dispositif conforme à la revendication 1,
**caractérisé en ce que**
le premier poids d'équilibrage (3) a, par rapport à l'axe vertical du cylindre (Z) une hauteur géodésique différente de celle du second arbre d'équilibrage (4).

3. Dispositif conforme à la revendication 2,
**caractérisé en ce que**
le premier arbre d'équilibrage (3) est géodisement plus bas.

4. Dispositif conforme à l'une des revendications 1 à 3,
**caractérisé en ce que**
la masse du premier poids d'équilibrage (3') est jusqu'à 30% supérieure à la masse du second poids d'équilibrage (4').
